## Europäisches Patentamt
## European Patent Office
## Office européen des brevets

(19)

(11) Numéro de publication: **0 172 773**
**B1**

(12) # FASCICULE DE BREVET EUROPÉEN

(45) Date de publication du fascicule du brevet:
27.04.88

(51) Int. Cl.⁴: **C 04 B 24/38**

(21) Numéro de dépôt: **85401603.7**

(22) Date de dépôt: **06.08.85**

(54) **Procédé de fabrication de panneaux de plâtre faisant intervenir des produits amylacés.**

(30) Priorité: **06.08.84 FR 8412414**

(43) Date de publication de la demande:
**26.02.86 Bulletin 86/9**

(45) Mention de la délivrance du brevet:
**27.04.88 Bulletin 88/17**

(84) Etats contractants désignés:
**AT BE CH DE GB IT LI LU NL SE**

(56) Documents cité:
**DE-A-3 302 988**
**DE-B-2 458 998**
**FR-A-1 429 406**
**FR-A-2 165 355**
**FR-A-2 228 735**
**FR-A-2 393 774**
**US-A-2 600 018**

(73) Titulaire: **Roquette Frères, F-62136 Lestrem (FR)**

(72) Inventeur: **Huchette, Michel, 63, rue du Maréchal Joffre, F-59660 Merville (FR)**
Inventeur: **Dumont, Monique, Route de Merville La Motte au Bois/Morbecque, F-59190 Hazebrouck (FR)**

(74) Mandataire: **Koch, Gustave, Cabinet PLASSERAUD 84, rue d'Amsterdam, F-75009 Paris (FR)**

LIBER, STOCKHOLM 1988

# 0 172 773

**Description**

L'invention a pour objet un procédé de fabrication de panneaux de plâtre.

Elle vise également et ce, à titre de produits industriels nouveaux, certaines matières premières qui peuvent être mises en oeuvre dans le cadre de cette fabrication.

Elle vise enfin l'application à ce procédé de certains produits amylacés.

Les panneaux de plâtre jouent un rôle important en tant qu'éléments de construction dans l'industrie du bâtiment.

Ils comprennent une âme de plâtre disposée entre deux feuilles de papier ou de carton.

On les fabrique en continu en formant un ruban "sandwich" constitué par du plâtre préalablement gâché et disposé entre les deux feuilles de papier ou carton, l'ensemble étant entraîné par un tapis roulant.

Il est connu d'introduire dans le plâtre, au moment du gâchage, une certaine quantité, c'est-à-dire généralement de l'ordre de 0,3 à 1 %, d'amidon préalablement soumis à des opérations de dégradation telles que l'hydrolyse acide ou enzymatique, l'oxydation, la dextrinification, l'amidon ainsi dégradé pouvant en outre avoir été soumis à des modifications chimiques telles que l'estérification ou l'éthérification.

L'amidon ainsi traité migre vers l'interface plâtre-carton et agit à la fois comme agent de collage entre l'âme de plâtre et les feuilles de carton et comme colloïde protecteur pour les cristaux de plâtre de la surface de l'âme de plâtre au moment de l'opération de séchage à laquelle sont soumis les panneaux proprement dits; ces derniers sont obtenus par découpage du ruban sandwich, découpage qui devient possible lorsque ledit ruban a atteint une rigidité suffisante grâce à la prise du plâtre qui se produit au bout de quelques minutes après la formation du ruban sandwich.

Pendant l'opération de séchage qui dure quelques dizaines de minutes, la température des plaques est portée à environ 85° C.

Ce procédé connu donne satisfaction sur le plan des qualités de la liaison plâtre-carton, c'est-à-dire sur le plan des caractéristiques mécaniques des panneaux obtenus, mais il subit le préjudice du prix de la modification chimique des amidons mis en oeuvre et traités comme indiqué plus haut.

Il a bien été tenté d'utiliser des amidons natifs ainsi que de la fécule native mais les résultats enregistrés étaient désastreux sur le plan de l'adhérence entre l'âme de plâtre et les feuilles de carton.

Le mérite de la Société Demanderesse était donc d'autant plus grand d'avoir pu montrer qu'il devenait possible d'avoir recours à un amidon natif, plus précisément à l'amidon de blé natif dès lors que celui-ci répondait à des caractéristiques préalables impératives de granulométrie, c'est-à-dire comportait, d'une part, une proportion d'au moins 30 %, de préférence d'au moins 45 % en poids de particules d'amidon natif de blé de dimension inférieure à 10,7 $\mu$m et, d'autre part, une proportion d'au plus 20 % en poids de particules d'amidon natif de blé de dimension supérieure à 35 $\mu$m (les proportions de ces deux fractions granulométriques étant déterminée par une méthode d'analyse A), ce qui n'était pas le cas des amidons et fécule natifs que l'on avait tenté d'utiliser auparavant.

Il s'ensuit que le procédé de fabrication de panneaux de plâtre conforme à l'invention est caractérisé par le fait que l'on utilise, à titre d'agent de collage et de colloïde protecteur, une quantité de matière amylacée qui représente de 0,2 à 2 % en poids par rapport à la masse de plâtre mise en oeuvre, ladite matière amylacée comportant, d'une part, une proportion d'au moins 30 %, de préférence d'au moins 45 % en poids de particules d'amidon natif de blé de dimension inférieure à 10,7 $\mu$m et, d'autre part, une proportion d'au plus 20 % en poids de particules d'amidon natif de blé de dimension supérieure à 35 $\mu$m, les proportions de ces deux fractions granulométriques étant déterminée par une méthode d'analyse A.

Suivant un mode de réalisation avantageux du susdit procédé, la matière amylacée est introduite dans le plâtre avant gâchage.

Le susdit amidon natif dont l'invention vise l'application au susdit procédé peut également être mis en oeuvre par introduction préalable dans l'eau de gâchage.

Suivant un autre mode de réalisation avantageux du susdit procédé, l'amidon natif de blé mis en oeuvre conformément à l'invention est intimement incorporé au plâtre avant l'opération de gâchage, le mélange ainsi obtenu qui est prêt à l'usage et qui peut également contenir un accélérateur de prise constituant un produit industriel nouveau.

La susdite méthode d'analyse A est effectuée au moyen d'un compteur de particules dénommé "Coulter Counter", modèle TA II, Commercialisé par la Société Coultronics et dont le principe et le fonctionnement sont décrits dans la norme AFNOR X11670 de juillet 1979.

Dans cet appareil, un liquide électrolyte contenant en suspension les particules à identifier est aspiré à travers un tube calibré de part et d'autre duquel sont plongés deux électrodes reliées à une source de courant continu. Lorsqu'une particule traverse ce tube, la diminution du volume d'électrolyte provoque durant le temps de passage une augmentation brutale de la résistance proportionnelle au volume du liquide déplacé, donc au volume de la particule. Si l'intensité du courant est maintenue constante, le volume de la particule est alors proportionnel à la variation de tension. Chaque particule est donc comptée à son volume connu. Les informations sont réparties dans 16 canaux de progression géométrique de réseau 1,26 en diamètre. L'étalonnage de l'appareil s'effectue avec des grains monodimensionnels de pollen.

Dans le cadre de l'utilisation du susdit compteur de particules pour la sélection de la matière amylacée mise en oeuvre selon l'invention, c'est-à-dire pour déterminer si elle répond aux deux conditions de répartition granulométrique indiquées plus haut, on prépare tout d'abord une suspension de la matière amylacée pour la

2

mesure au Coulter Counter.

Pour préparer cette suspension, on introduit dans un bécher, par exemple un bécher de 250 ml de contenance, une quantité de 100 ml d'eau distillée filtrée au préalable sur filtre Millipore de 0,22 micronmètre. On ajoute ensuite 10 g de l'amidon à analyser. On agite et homogénéise énergiquement pendant 1 minute, par exemple à l'aide du dispositif d'homogénéisation connu sous l'appellation "Ultra Turrax".

On prélève ensuite 2 ml de la suspension ainsi obtenue et on les introduit dans un bécher contenant 50 ml d'électrolyte constitué, par exemple, par une solution aqueuse de NaCl à 1 % (poids/volume) et on homogénéise à l'aide d'un agitateur mécanique.

On prélève 2 ml de ce mélange et on les introduit dans le vase de mesure contenant 200 ml du susdit électrolyte.

On place le vase de mesure dans une cuve à ultrasons; on fait agir les ultrasons pendant 30 secondes.

On procède à l'analyse granulométrique de la suspension ainsi obtenue dans le Coulter Counter.

Pour la détermination de l'importance de la fraction granulométrique de dimension inférieure à 10,7 µm, on utilise un tube calibré de 140 µm.

Pour la détermination de l'importance de la fraction granulométrique de dimension supérieure à 35 µm, on utilise un tube calibré de 400 µm.

D'autres aspects de l'invention apparaissent dans la suite de la description et dans les exemples dans lesquels sont décrits des modes de réalisation avantageux.

Se proposant, par conséquent, de fabriquer des panneaux de plâtre, conformément à l'invention, on s'y prend comme suit ou de façon équivalente.

On peut avoir recours à du plâtre semi-hydrate dont la prise et accélérée et ramenée à environ 2 à 3 minutes par incorporation d'un agent accélérateur de prise qui peut être du gypse broyé et qui est mis en oeuvre à raison d'environ 0,1 à 0,5 % en poids par rapport à la masse de plâtre.

De plus, conformément à l'invention, on introduit dans le plâtre une proportion de 0,2 à 2 % de matière amylacée répondant à la définition donnée ci-dessus.

Sur le plan pratique, une telle matière amylacée est sélectionnée parmi les amidons dits "Amidon B", qui sont obtenus dans les amidonneries de blé, au cours de l'extraction du gluten; cet amidon B ou amidon "second" est constitué essentiellement par une proportion prépondérante de petits granules et contient d'autres produits tels que des pentosanes et des protéines.

On rappelle que l'autre fraction d'amidon natif obtenue en amidonnerie de blé est constituée par l'amidon A qui est plus raffiné et qui renferme surtout de gros granules (voir notamment l'ouvrage "Starch Production Technology" de I.A. Radley, publié en 1976 par Applied Science Publishers, Ltd.).

Pour vérifier si un amidon natif de blé du type B donné convient, on le soumet à l'analyse granulométrique décrite plus haut.

Le plâtre, l'agent accélérateur de prise et l'amidon sélectionné sont mélangés intimement, puis le mélange est gâché avec une quantité appropriée d'eau - de l'ordre de 100 parties de plâtre pour 70 parties en poids d'eau - dont la température est voisine de 40°C, jusqu'à obtention d'une pâte homogène.

On forme alors le ruban sandwich et on découpe les panneaux après la prise, c'est-à-dire au bout d'environ 5 minutes, ces panneaux étant ensuite soumis à un cycle de séchage pouvant comporter trois phases successives comme connu.

Dans les exemples qui suivent, on a opéré avec quelques centaines de grammes de plâtre en respectant les proportions d'amidon, d'agent accélérateur et d'eau indiquées plus haut.

Après avoir effectué un mélange intime des constituants, la poudre renfermant l'amidon et l'agent accélérateur est gâchée pendant 1 minute environ à l'aide d'une spatule et avec la quantité appropriée d'eau, jusqu'à obtention d'une pâte homogène.

La préparation est rapidement déposée dans un moule contenant déjà, à sa partie intérieure, une des deux feuilles cartonnées, l'ensemble étant posé sur un support inerte. Après avoir appliqué la feuille cartonnée supérieure, il est nécessaire d'exercer une certaine pression telle que celle rencontrée industriellement lors de la confection des panneaux de plâtre.

La plaquette est mise sur chant après 5 minutes environ et, une fois l'hydratation terminée, démoulée après 15 à 20 minutes.

L'humidité de la plaquette est ramenée à 3 % environ par une opération de séchage en deux étapes de 20 minutes chacune, à 180°C en atmosphère saturée en vapeur d'eau pour la première et à 110°C en atmosphère sèche pour la seconde, l'ensemble étant suivi d'un reconditionnement suffisant (24 à 48 heures) à température ambiante.

Le collage plâtre-carton est estimé par un test de défibrage. On pratique, à l'aide d'un couteau, notamment du type de ceux appelés "cutter" dans la technique, une incision en forme de croix au centre de chacune des faces de la plaquette de plâtre. On essaie ensuite de séparer, à l'aide du même couteau, le carton du plâtre.

Une note qualifiant l'adhérence et allant de 0 à 10 pour chaque face, est exprimée en fonction du défibrage obtenu, c'est-à-dire:

- le défibrage total reçoit la note 10 et correspond à une adhérence très bonne,
- le défibrage moyen reçoit la note 5 et correspond à une adhérence insuffisante,
- le défibrage nul reçoit la note 0 et correspond à une adhérence nulle.

Une valeur de 15 pour la somme des notes enregistrées pour les deux faces est considérée comme la limite industrielle inférieure acceptable d'adhérence entre le plâtre et les faces cartonnées.

Dans tous les exemples qui suivent, le mode opératoire ci-dessus mentionné est maintenu; seule la qualité de l'amidon utilisé change.

**Exemple 1:** témoin.

On réalise tout d'abord une plaquette témoin à partir d'un amidon de maïs fluidifié par voie acide et séché, couramment utilisé dans la fabrication industrielle des plaques de plâtre.

La valeur du collage illustrée par la somme des notes pour les deux faces est de 20 et correspond à une adhérence excellente.

Il est impossible de décoller les feuilles cartonnées du plâtre.

**Exemple 2**

L'amidon utilisé est un amidon de maïs non fluidifié, séché. Cet exemple montre la nécessité du traitement d'hydrolyse de l'amidon pour l'obtention d'un bon collage.

Le spectre granulométrique de cet amidon est le suivant:
- particules < 10, 7 $\mu$m = 12
- particules > 35 $\mu$m = 0.

La somme des notes enregistrées pour les deux faces est 4.

L'adhérence est nulle. Les cartons se détachent très facilement du plâtre.

**Exemple 3**

L'amidon retenu est un amidon de blé standard séché, caractérisé par une teneur massique en particules fines inférieures à 10,7 micromètres de 19 % et une teneur massique en grosses particules supérieures à 35 micromètres de 1 %.

La somme des notes enregistrées pour les deux faces est égale à 8; l'adhérence est insuffisante.

On note seulement un début d'accrochage des fibres de papier sur le plâtre.

**Exemple 4**

L'amidon essayé est un amidon du type A comportant une majorité de grosses particules.

La teneur massique de cet amidon en particules inférieures à 10,7 micromètres est de 2 %, celle en particules supérieures à 35 micromètres de 2 %.

La somme des notes pour les deux faces est égale à 1 et l'adhérence est nulle.

Le comportement de cet amidon est équivalent à celui mentionné dans l'exemple 2.

**Exemple 5**

L'amidon sélectionné correspond à la fraction fine, c'est-à-dire la fraction B, d'un amidon de blé, obtenue selon la technique rappelée ci-dessus. Le produit est dans ce cas non séché et introduit dans le plâtre sous sa forme liquide dans l'eau de gâchage. La teneur massique de cet amidon en particules inférieures à 10,7 micromètres est de 55 %, celle en particules supérieures à 35 micromètres de 0 %.

La somme des notes pour les deux faces est égale à 20 et l'adhérence est excellente.

Les résultats sont identiques à ceux de l'exemple témoin 1.

**Exemple 6**

Cet exemple comprend six essais correspondant à autant d'amidons différents séchés et montre l'importance d'avoir une teneur massique en particules fines (inférieures à 10,7 micromètres) suffisante et une teneur massique en particules supérieures à 35 micromètres limitée.

Les résultats sont réunis dans le tableau I.

4

## 0 172 773

**Tableau I**

| Essais | a | b | c | d | e | f |
|---|---|---|---|---|---|---|
| Pourcentage de particules inférieures à 10,7 micromètres (tube de 140 μm) | 55 | 60 | 25 | 60 | 51 | 71 |
| Pourcentage de particules supérieures à 35 micromètres (tube de 400 μm) | 8 | 16 | 25 | 7 | 10 | 35 |
| Somme des notes enregistrées pour les deux faces | 19 | 15 | 13 | 19 | 18 | 9 |
| Adhérence | très bonne | bonne | insuf. | très bonne | très bonne | insuf. |

En suite de quoi et quel que soit le mode de réalisation adopté, on dispose ainsi d'un procédé de fabrication de panneaux de plâtre dont les caractéristiques résultent suffisamment de ce qui précède et à l'aide duquel on obtient avec un moindre coût, un collage au moins équivalent à celui obtenu avec les amidons dégradés de l'art antérieur.

Comme il va de soi et comme il résulte d'ailleurs déjà de ce qui précède, l'invention ne se limite nullement à ceux de ses modes d'application et de réalisation qui ont été plus particulièrement envisagés; elle en embrasse au contraire toutes les variantes.

### Revendications

1. Procédé de fabrication de panneaux de plâtre, caractérisé par le fait que l'on utilise, à titre d'agent de collage et de colloïde protecteur, une quantité de matière amylacée représentant de 0,2 à 2 % en poids par rapport à la masse de plâtre mise en oeuvre, ladite matière amylacée comportant, d'une part, une proportion d'au moins 30 %, de préférence d'au moins 45 % en poids de particules d'amidon natif de blé de dimension inférieure à 10,7 μm et, d'autre part, une proportion d'au plus 20 % en poids de particules d'amidon natif de blé de dimension supérieure à 35 μm, la présence de ces deux fractions granulométriques étant déterminée par une méthode d'analyse A.

2. Procédé selon la revendication 1, caractérisé par le fait que la matière amylacée mise en oeuvre est un amidon dit "Amidon B".

3. Procédé selon l'une des revendications 1 et 2, caractérisé par le fait que la matière amylacée est introduite dans le plâtre avant gâchage.

4. Procédé selon l'une des revendications 1 et 2, caractérisé par le fait que la matière amylacée est introduite dans l'eau de gâchage.

5. Produit industriel nouveau constitué par un mélange intime comportant du plâtre semi-hydrate et de 0,2 à 2 % en poids par rapport à la masse de plâtre d'amidon natif de blé conforme à celui qui est défini à la revendication 1.

### Patentansprüche

1. Verfahren zur Herstellung von Gipsplatten, dadurch gekennzeichnet, dass man als Klebe- und Kolloidschutzmittel eine Menge eines stärkehaltigen Materials im Ausmass von 0,2 bis 2 Gew.-%, bezogen auf die eingesetzte Gipsmasse, verwendet, welches stärkehaltige Material einerseits einen Anteil von wenigstens 30 %, vorzugsweise wenigstens 45 Gew.-% an Teilchen nativer Getreidestärke mit Abmessungen von unter 10,7 μm und anderseits einen Anteil von höchstens 20 Gew.-% an Teilchen von nativer Weizenstärke mit Abmessungen von über 35 μm aufweist, wobei das Vorliegen dieser beiden Korngrössenfraktionen nach einer Analysenmethode A bestimmt wird.

2. Verfahren nach Anspruch 1, dadurch gekennzeichnet, dass das eingesetzte stärkehaltige Material eine als "Stärke B" bezeichnete Stärke ist.

3. Verfahren nach einem der Ansprüche 1 und 2, dadurch gekennzeichnet, dass das stärkehaltige Material in den Gips vor dem Anmachen eingebracht wird.

4. Verfahren nach einem der Ansprüche 1 und 2, dadurch gekennzeichnet, dass das stärkehaltige Material in das Anmachwasser eingeführt wird.

5. Neues Industrieerzeugnis, bestehend aus einem innigen, Gipshalbhydrat und 0,2 bis 2 Gew.-%, bezogen auf die Gipsmasse, an nativer Weizenstärke entsprechend jener, die in Anspruch 1 definiert ist, enthaltendem Gemisch.

5

**Claims**

1. Process for the manufacture of gypsum boards, characterized by the fact that there is used as a bonding agent and protective colloid, an amount of amylaceous material representing from 0.2 to 2 % by weight with respect to the weight of plaster employed, said amylaceous material comprising, on the one hand, a proportion of at least 30 %, preferably at least 45 % by weight of particles of native wheat starch of dimension less than 10.7 µm and, on the other hand, a proportion of at the most 20 % by weight of particles of native wheat starch of dimension greater than 35 µm, the presence of these two granulometric fractions being determined by a method A of analysis.

2. Process according to claim 1, characterized by the fact that the amylaceous material employed is a so-called "starch B".

3. Process according to one of claims 1 and 2, characterized by the fact that the amylaceous material is introduced into the plaster before mixing.

4. Process according to one of claims 1 and 2, characterized by the fact that the amylaceous material is introduced into the mixing water.

5. Novel industrial product constituted by an intimate mixture comprising a semi-hydrated plaster and 0.2 to 2 % by weight with respect to the weight of plaster of native wheat starch according to that defined in claim 1.